Europäisches Patentamt

**European Patent Office**

**Office européen des brevets**

(19)

(11) Publication number: **0 000 242**

**B1**

# EUROPEAN PATENT SPECIFICATION

(12)

(45) Date of publication of patent specification: **15.07.81**

(51) Int. Cl.³: **B 29 D 7/24**

(21) Application number: **78300015.1**

(22) Date of filing: **05.06.78**

(54) Process and apparatus for continuously stretching a synthetic polymeric film in the longitudinal direction.

(30) Priority: **21.06.77 GB 2583977**

(43) Date of publication of application:
**10.01.79 Bulletin 79/1**

(45) Publication of the grant of the European patent:
**15.07.81 Bulletin 81/28**

(84) Designated Contracting States:
**BE DE FR GB LU NL**

(56) References cited:
**FR - A - 2 297 126**
**GB - A - 1 120 871**
**GB - A - 1 124 886**
**US - A - 2 799 896**

(73) Proprietor: **IMPERIAL CHEMICAL INDUSTRIES LIMITED**
**Imperial Chemical House Millbank**
**London SW1P 3JF (GB)**

(72) Inventor: **Stinchcombe, John Wright**
**15 Froghall Lane Walkern**
**Stevenage, Herts (GB)**
Inventor: **Faraday, Andrew Gibson**
**2c Hardthorn Crescent**
**Dumfries, Dumfriesshire (GB)**
Inventor: **Paul, James Moffat**
**Rusthoekstraat 19**
**The Hague (NL)**

(74) Representative: **Arnold, Graham Donald et al,**
**Imperial Chemical Industries Limited Legal**
**Department: Patents Thames House North**
**Millbank**
**London SW1P 4QG (GB)**

Courier Press, Leamington Spa, England.

Process and apparatus for continuously stretching a synthetic polymeric film in the longitudinal direction

The present invention relates to a process and apparatus for stretching synthetic polymeric films, e.g. to impart molecular orientation to the films, and in particular relates to the longitudinal stretching of such films over an assembly of rotating rolls.

French specification 2 297 126 describes a process and apparatus for continuously stretching a synthetic polymeric film in the longitudinal direction which comprises applying a longitudinal stretching tension to the film whilst it is moving continuously in the longitudinal direction, wherein the film is stretched over a stretching span defined by two adjacent counter-rotating rolls having parallel axes of rotation and located transversely of the film and around which the film passes, the span of unsupported film between the counter-rotating rolls measured perpendicular to their axes being less than the sum of the radii of the counter-rotating rolls, and the film is heated to its stretching temperature, the first counter-rotating roll being heated to at least the film stretching temperature and the second counter-rotating roll being maintained at a temperature below the film stretching temperature, each of said counter-rotating rolls having a surface which does not adhere to the film when the film is heated to the stretching temperature, such as the surface of a non-sticking ceramic coating.

US Specification 2 799 896 describes a process for stretching a thermoplastics film over the surface of one or more cooled stationary bars which preferably have matte working surfaces. For example, sand blasted steel bars, optionally having a hard chromium plating may be used.

Applicants have now discovered that a stainless steel or chromium plated roll of defined surface mattness is effective as the first counter-rotating roll in such a process and apparatus.

The present invention relates to a process for continuously stretching a synthetic polymeric film in the longitudinal direction, which comprises applying a longitudinal stretching tension to the film whilst it is moving continuously in the longitudinal direction, wherein the film is stretched over a stretching span defined by two adjacent counter-rotating rolls having parallel axes of rotation and located transversely of the film and around which the film passes, the span of unsupported film between the counter-rotating rolls measured perpendicular to their axes being less than the sum of the radii of the counter-rotating rolls, and the film is heated to its stretching temperature, the first counter-rotating roll being heated to at least the film stretching temperature and the second counter-rotating roll being maintained at a temperature equal to or below the film stretching temperature, characterised in that the first counter-rotating roll is a matt surfaced stainless steel roll or a matt surfaced chromium plated roll having a surface mattness which does not adhere to the film when the film is heated to the stretching temperature, said surface mattness being represented by a Centre Line Average, as measured by British Standard 1134:1950, in the range 127 to 889 nm (5 to 35 microinch).

The invention also relates to an apparatus for continuously stretching a synthetic polymeric film in the longitudinal direction which comprises means for applying a longitudinal stretching tension to the film whilst it is moving continuously in the longitudinal direction through the apparatus, wherein a film stretching span is defined by two adjacent counter-rotating rolls having parallel axes of rotation and located transversely of the film path, said counter-rotating rolls being spaced from each other such that the span of unsupported film between the counter-rotating rolls measured perpendicular to their axes is less than the sum of the radii of the counter-rotating rolls, means being provided to heat the film to its stretching temperature prior to stretching, the first counter-rotating roll being heated in operation to at least the film stretching temperature and the second counter-rotating roll being maintained in operation at a temperature equal to or below the film stretching temperature, characterised in that the first counter-rotating roll is a matt surfaced stainless steel roll or a matt surfaced chromium plated roll having a surface mattness which does not adhere to the film when the film is heated to the stretching temperature, said surface mattness being represented by a Centre Line Average in the range 127 to 899 nm (5 to 35 microinch).

The process and apparatus of this invention are especially useful for molecularly orienting linear polyester films such as polyethylene terephthalate films by longitudinal stretching. However, the invention is also applicable to the stretching of other orientable films.

The present invention involves the sequence of heating the film to its stretching temperature, e.g. for linear polyester films above the glass transition temperature of the polymer, stretching the heated film and subsequently quenching the stretched film to a temperature below the stretching temperature. The first counter-rotating roll (i.e. the counter-rotating roll first contacted by the film during its passage through the apparatus) which is heated at least to the film stretching temperature, thereby heating the film by surface contact, preferably terminates a section of the apparatus in which the film is progressively heated prior to stretching. For example, the film may be heated in a preheating section, located immediately prior to the first counter-rotating roll, in which it passes around one or more rolls, which may be driven to match the speed of the film through that part of the apparatus or may be idling and hence rotated by the movement of the film itself. Radiant heating, such as infra-red heating, may be used as an alternative to or in combination with the heating roll(s) of the preheating section. Preferably, the preheating section consists of a plurality of heated rolls having a surface which does not adhere to the film at the heating temperatures applied. Thus some or all of the rolls may require surface treatment or coating, e.g. treatment to render the surface matt or the provision of a matt coating, to avoid film adhesion to the roll surface.

Stretching may be terminated by reducing the temperature of the film to a temperature below the stretching temperature by passage over the second counter-rotating roll. This may be accomplished by cooling the second counter-rotating roll to quench the film to a temperature below the stretching temperature. Alternatively, when the second counter-rotating roll is maintained at the stretching temperature, stretching may be terminated by a nip roll or electrostatic pinning which fixes the film against the roll surface thereby preventing stretching beyond the line of fixing. The film may subsequently be passed over further quenching rolls to reduce the film temperature even further. The second counter-rotating roll should have a surface which does not adhere to the film and may also require surface treatment or coating, e.g. treatment to render the surface matt or the provision of a matt coating, although it has surprisingly been found that a polished roll, e.g. a roll surface having a texture represented by a Centre Line Average such as 50.8 to 76.2 nm (2 to 3 microinch), does not adhere to the film, especially polyethylene terephthalate films. Likewise, if necessary, the further quenching rolls may have a surface which does not adhere to the film as it passes over them. It has been found that the surface quality of polyester films, such as polyethylene terephthalate films, especially films having an unstretched thickness in the range 750 to 2000 $\mu$m, can be improved by maintaining the second counter-rotating roll at a temperature below but approaching the stretching temperature, e.g. in the range 60° to 85°C. In particular, surface scratching is reduced and the surface is more glossy.

According to this invention, the film is heated to its stretching temperature by surface contact at least with the first counter-rotating roll and desirably by contact with a set of heated rolls in a preheating section. Likewise, quenching is effected by surface contact with the second counter-rotating roll and any other quenching rolls which may be employed. Sticking of the film to the roll surfaces must be avoided but the temperatures employed for the stretching of some polymeric films are so high that the films would adhere to the surface of a polished steel or chromium plated steel roll thereby imposing surface quality defects such as transverse impressions or bars upon the film as it is separated from the roll surface by the tension in the film. For example, polyethylene terephthalate films are stretched at temperatures above the polymeric glass transition temperature (about 80°C) and generally in the range 85° to 100°C and would adhere at temperatures above about 80°C to normal polished steel or chromium plated rolls.

According to this invention, the sticking of the polymeric film to the first counter-rotating roll is avoided by using a stainless steel or chromium plated roll having a specified surface mattness which does not adhere to the film. The heating rolls in the preheating section and any quenching rolls used in conjunction with the second counter-rotating roll should also be non-sticking, e.g. by rendering the roll surfaces matt.

Accordingly, the first counter-rotating roll has a surface texture or mattness represented by a Centre Line Average, as measured by British Standard 1134:1950, of at least 127 nm (5 microinch) and preferably at least 254 nm (10 microinch), such mattness preventing the film from adhering to the roll surfaces when it is heated to the film stretching temperature. A texture or mattness of less than 127 nm (5 microinch), i.e. a "polished" roll, introduces a risk of sticking at film stretching temperatures. Satisfactory heat transfer to and from the film is achieved with such surfaces whilst avoiding imperfections being imposed on the film surface by the film adhering to the roll surfaces. Surface texture or mattness represented by greater Centre Line Average values may impose some impression, embossing or scratching upon the film and therefore it is preferred to avoid Centre Line Average values exceeding 889 nm (35 microinch). Satisfactory heat transfer and stretching can be achieved with linear polyester films such as polyethylene terephthalate films when the counter-rotating rolls have a surface texture or mattness represented by a Centre Line Average of 254 to 508 (10 to 20 microinch) and particularly 254 to 381 nm (10 to 5 microinch).

It is preferred that the second counter-rotating roll should have a polished surface texture, i.e. a Centre Line Average of 50.8 to 76.2 nm (2 to 3 microinch), in the production of films having a high quality surface finish in order to avoid imprinting the film surface as may result if rougher rolls were used.

Adhesion and sticking to the rolls of the preheating section and/or the further quenching rolls may also be avoided by providing their surfaces with a texture represented by a Centre Line Average in the range 12.7 to 254 nm (0.5 to 10 microinch) and preferably 50.8 to 76.2 nm (2 to 3 microinch).

The surface texture or mattness of such counter-rotating, preheating and further

quenching rolls may be achieved by roughening the surface of the rolls by conventional particle blasting techniques, e.g. by sand blasting, grinding or engraving. Rolls treated in this manner may comprise stainless steel surfaced rolls or chromium plated rolls which are provided with an appropriate mattness by blasting.

A surface coating having the desired surface mattness may be applied to the rolls other than the first counter-rotating roll.

The film may be pressed firmly into contact with either or both of the first and second counter-rotating rolls by means of a lay-on roll or electrostatic means thereby defining the length of the film in which stretching may occur.

The present invention may be used for the stretching of any flat self-supporting polymeric film which is capable of being stretched, e.g. films of polystyrene, polyamides, polymers and copolymers of vinyl chloride, polycarbonate, polymers and copolymers of olefines such as polypropylene, and polyesters of dibasic aromatic carboxylic acids with divalent alcohols. Polyester films which may be stretched according to this invention may be produced by condensing one or more dicarboxylic acids or their lower alkyl diesters, e.g. terephthalic acid, isophthalic acid, phthalic acid, 2,5-, 2,6- and 2,7-naphthalene dicarboxylic acid, succinic acid, sebacic acid, adipic acid, azelaic acid, diphenyl dicarboxylic acid, and hexahydroterephthalic acid, or bis-p-carboxyl phenoxy ethane, optionally with a monocarboxylic acid, such as pivalic acid, with one or more alkylene glycols, e.g. ethylene glycol, 1,3-propanediol, 1,4-butanediol, neopentyl glycol and 1,4-cyclohexane-dimethanol. The invention is particularly suitable for the stretching of polyethylene terephthalate films. The films stretched according to this invention may contain conventional additives such as particulate fillers added, for example, for slip or surface matting properties, anti-static agents, dyes and pigments. The invention is also suitable for the stretching of composite films comprising two or more polymeric layers.

Polyethylene terephthalate films may be stretched according to this invention at temperatures in the range 80° to 100°C and preferably in the range 80° to 90°C and using degrees of stretching or draw ratios in the range from 1.5:1 to 6.5:1. When the longitudinally stretched film is to be subjected to further stretching operations, e.g. in the transverse direction it is preferred that the draw ratio in the longitudinal direction should be in the range 2:1 to 5:1.

The minimum unsupported film span between the two counter-rotating rolls is determined by the need to thread the film between the rolls when commencing the film-making process and generally need be no more than 3.81 cm (1.5 inches).

In the longitudinal stretching of polyethylene terephthalate films according to this invention it is preferred that the line speed of the film fed to the first counter-rotating roll should be in the range 15.24 to 152.4 m/minute (50 to 500 ft/minute). Since the benefits of this invention are especially useful in diminishing "neck-in" at higher film speeds, the process may be used with advantage at line speeds above about 30.48 m/minute (100 ft/minute) and more particularly above 60.96 m/minute (200 ft/minute).

In a preferred embodiment of this invention, the process and apparatus are used as one step in the production of biaxially oriented linear polyester films such as polyethylene terephthalate films. For example, polyethylene terephthalate film may be extruded and quenched into the amorphous state in a known manner, and then longitudinally stretched in accordance with this invention, and finally transversely stretched and heat set in a known manner. Alternatively, the film may be stretched first in the transverse direction and then in the longitudinal direction. The process and apparatus of this invention may be used in the production of "balanced" film having similar tensile strengths in mutually perpendicular directions or "tensilised" films having a greater tensile strength in one direction, usually the longitudinal direction, than in other directions. The invention may, for example, be used in a process for the production of "tensilised" film in which the film is stretched first in its transverse direction and then in its longitudinal direction.

The invention is especially suitable for the longitudinal stretching of amorphous polyethylene terephthalate films having a thickness in the range 90 to 2000 $\mu$m.

In one embodiment of the invention which is suitable for the stretching of thin films, e.g. films of polyethylene terephthalate of thickness in the range 90 to 750 $\mu$m, the stretching tension is established between sets of slow and fast nip rolls and the film is preheated by passage over matt surfaced preheating rolls located between the slow nip rolls and the counter-rotating rolls. The first counter-rotating roll is positively driven at substantially the peripheral speed of the slow nip rolls whereas the second counter-rotating roll is idling. In order to reduce "neck-in" on the first counter-rotating roll, a lay-on roll is employed to press the film firmly into contact with the counter-rotating roll, preferably located at or close to the initial touch-down of the film on the counter-rotating roll, i.e. the region of first contact of the film with the counter-rotating roll.

In a further embodiment of the invention which is suitable for stretching thicker films, e.g. films of polyethylene terephthalate of thickness from 750 to 2000 $\mu$m, the apparatus and stretching processes are similar to those of the embodiment described in the preceding paragraph, with the exception that the lay-on roll associated with the first counter-rotating roll may be omitted. In a modification of this embodiment, the second counter-rotating roll is maintained at a temperature below but approaching the stretching temperature, i.e. in the range from 60° to 85°C, since such a temperature is effective in improving the surface quality of the film particularly by reducing surface scratching and improving gloss. It has been found that the second counter-rotating roll should be positively driven when such temperatures are employed.

The films manufactured according to this invention may be used in any of the commonly known uses for which polymeric films are useful, e.g. as photographic bases, magnetic tape bases, insulants for electrical devices, for instance as slot liners, packaging films, drawing office materials, bases for coating with metallising layers, cable wrapping, bases for printed circuits, electrical capacitor dielectrics, stamping foils, and labels.

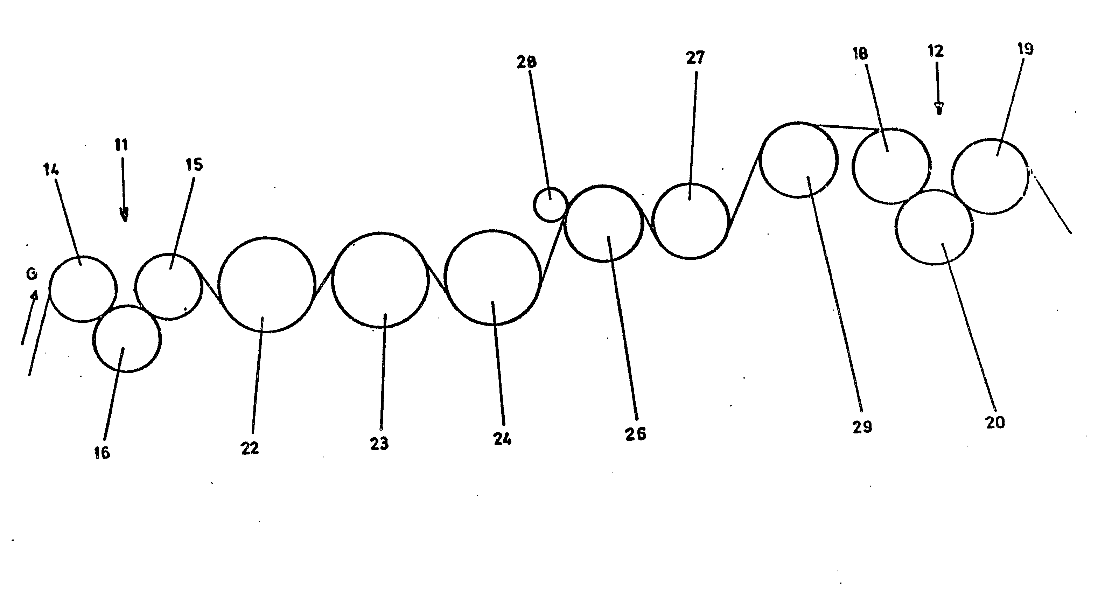

In order that the invention may be more readily understood it is further described with reference to the accompanying drawing which illustrates schematically an assembly of rolls for longitudinally stretching a polyethylene terephthalate film, the rolls being viewed from their ends.

Amorphous polyethylene terephthalate film 175 $\mu$m thick is extruded and rapidly quenched in a known manner and supplied to the apparatus in the direction of the arrow G and is transported continuously through the apparatus. The apparatus includes a slow cluster of nip rolls 11 and a fast cluster of nip rolls 12. The slow nip rolls 11 include two driven rolls 14 and 15 and an idling roll 16. Likewise, the fast nip rolls include two driven rolls 18 and 19 and an idling roll 20. The driven rolls 18 and 19 rotate at a peripheral speed approximately 3.5 times that of the rolls 14 and 15.

A preheating section includes three idling steel rolls 22, 23 and 24 having a matt surfaced chromium plating layer of Centre Line Average about 76.2 nm (3 microinch) and heated by the passage of hot water to a surface temperature of about 90°C.

Two counter-rotating rolls 26 and 27 define a film stretching span. Both rolls 26 and 27 are of radius about 7.62 cm (3 inches). Roll 27 is an idling roll and roll 26 is driven so that the stretching tension is applied to the film between the roll 26 and the fast nip rolls 12 although in a modification of the apparatus the roll 26 may also be idling. The driven rolls 18 and 19 of the fast nip rolls 12 rotate at a peripheral speed about 3.5 times that of the roll 26. The film follows the illustrated path between the rolls 26 and 27 so that the span of unsupported film between the rolls 26 and 27 is 1.5 inches. An idling lay-on roll 28 bears against the top surface of the film at approximately the region of first contact of the film with the roll 26 thereby pressing the film firmly into contact with the roll 26 to limit the slippage and stretching of the film on the roll surface and hence limit "neck-in" on the roll.

The first counter-rotating roll 26 has a chromium plating layer having a mattness represented by a Centre Line Average of about 304 nm (12 microinch) and the second counter-rotating roll 27 has a polished chromium plating layer of Centre Line Average 50.8 to 76.2 nm (2 to 3 microinch).

The first counter-rotating roll 26 is heated to a temperature in the range 80° to 90°C by the internal passage of hot water to heat the film to the required stretching temperature.

The second counter-rotating roll 27 is cooled to about 35°C by the internal passage of cold water to quench the stretched film to below the stretching temperature.

A further quenching roll 29 having a polished chromium plated surface is cooled to about 35°C by the internal passage of water.

In the operation of the apparatus illustrated in the drawing, the stretching tension is applied between the counter-rotating roll 26 and the fast nip rolls 12. The span of the film over which stretching occurs does not however extend the complete distance between the nip rolls 11 and 12 but simply over that portion of the film which is heated above its stretching temperature. The counter-rotating rolls 26 and 27 therefore define the stretching span.

After passing the slow nip rolls 11, the film is preheated by passage over the rolls 22, 23 and 24 and is finally heated to the stretching temperature by the first counter-rotating roll. The stretching span extends over those portions of the film which are heated to or above the stretching temperature. Stretching of the film occurs in the unsupported film span between the counter-rotating rolls 26 and 27 and, to a smaller degree, in those portions of the film on the surface of the first counter-rotating roll which have reached the stretching temperature. In order to limit excessive stretching and hence "neck-in" on the surface of the roll 26, the film is pressed firmly against the roll 26 by the lay-on roll 28.

Stretching is terminated by quenching the film to a temperature below the stretching temperature of the film on the cooled counter-rotating roll 27. Additional quenching is effected on the cooled further quenching roll 29.

In a modification of the assembly illustrated in the drawing, the lay-on roll 28 is replaced by an electrostatic pinning electrode maintained at a high potential with respect to the roll 26 which should be earthed so that the film can be secured to the surface of the roll 26 by means of electrostatic charges.

In a further modification of the assembly illustrated in the drawing, the clusters of slow and fast nip rolls 11 and 12 respectively may be replaced by nips consisting of two rolls each, of which one or both rolls may be driven.

In another modification of the assembly illustrated in the drawing, the apparatus was used for the longitudinal stretching of amorphous polyethylene terephthalate film having a thickness of about 1900 $\mu$m. In this modification, the lay-on roll 28 was omitted and the second counter-rotating roll 27 was positively driven at a peripheral speed substantially equal to that of the rolls 18 and 19. The roll 27 was also maintained at a temperature below but approaching the stretching temperature, i.e. in the range 60° to 85°C. The film so produced was substantially scratch-free and had a glossy surface.

## Claims

1. Process for continuously stretching a synthetic polymeric film in the longitudinal direction, which comprises applying a longitudinal stretching tension to the film whilst it is moving continuously in the longitudinal direction, wherein the film is stretched over a stretching span defined by two adjacent counter-rotating rolls having parallel axes of rotation and located transversely of the film and around which the film passes, the span of unsupported film between the counter-rotating rolls measured perpendicular to their axes being less than the sum of the radii of the counter-rotating rolls, and the film is heated to its stretching temperature, the first counter-rotating roll being heated to at least the film stretching temperature and the second counter-rotating roll being maintained at a temperature equal to or below the film stretching temperature, characterised in that the first counter-rotating roll is a matt surfaced stainless steel roll or a matt surfaced chromium plated roll having a surface mattness which does not adhere to the film when the film is heated to the stretching temperature, said surface mattness being represented by a Centre Line Average in the range 127 to 889 nm (5 to 35 microinch).

2. A process according to claim 1, characterised in that the second counter-rotating roll has a surface texture represented by a Centre Line Average of 50.8 to 76.2 nm (2 to 3 microinch).

3. A process according to claim 1 or 2, characterised in that the polyester film is a film of polyethylene terephthalate.

4. An apparatus for continuously stretching a synthetic polymeric film in the longitudinal direction, which comprises means for applying a longitudinal stretching tension to the film whilst it is moving continuously in the longitudinal direction through the apparatus, wherein a film stretching span is defined by two adjacent counter-rotating rolls having parallel axes of rotation and located transversely of the film path, said counter-rotating rolls being spaced from each other such that the span of unsupported film between the counter-rotating rolls measured perpendicular to their axes is less than the sum of the radii of the counter-rotating rolls, means being provided to heat the film to its stretching temperature prior to stretching, the first counter-rotating roll being heated in operation to at least the film stretching temperature and the second counter-rotating roll being maintained in operation at a temperature equal to or below the film stretching temperature, characterised in that the first counter-rotating roll is a matt surfaced stainless steel roll or a matt surfaced chromium plated roll having a surface mattness which does not adhere to the film when the film is heated to the stretching temperature, said surface mattness being represented by a Centre Line Average in the range 127 to 889 nm (5 to 35 microinch).

## Revendications

1. Procédé pour étirer en continu un film polymère synthétique dans la direction longitudinale, consistant à appliquer une tension d'étirage longitudinale au film tandis qu'il se déplace en continu dans la direction longitudinale, selon lequel le film est étiré sur une portée d'étirage définie par deux rouleaux ou cylindres contra-rotatifs adjacents ayant des axes de rotation parallèles et disposés transversalement au film et autour desquels le film passe, la portée ou l'étendue de film non supporté entre les rouleaux contra-rotatifs, mesurée perpendiculairement à leurs axes, étant inférieure à la somme des rayons de ces rouleaux contra-rotatifs, et le film est chauffé à sa température d'étirage, le premier rouleau contra-rotatif étant chauffé au moins à la température d'étirage du film et le second rouleau contra-rotatif étant maintenu à une température égale à la température d'étirage du film ou inférieure à cette température, caractérisé en ce que le premier rouleau contra-rotatif est un rouleau en acier inoxydable à état de surface mat ou un rouleau à revêtement de chrome à état de surface mat, ayant une matité de surface qui n'adhère pas sur le film quand le film est chauffé à la température d'étirage, cette matité de surface étant représentée par une valeur moyenne relativement à une ligne médiane comprise entre 127 et 889 nm (5 à 35 micropouces) (norme britannique 1134 : 1950).

2. Procédé suivant la revendication 1, caractérisé en ce que le second rouleau contra-rotatif a une texture de surface représentée par une valeur moyenne relativement à une ligne médiane de 50,8 à 76,2 nm (2 á 3 micropouces) (norme britannique 1134 : 1950).

3. Procédé suivant la revendication 1 ou 2, caractérisé en ce que le film de polyester est un film en téréphtalate de polyéthylène.

4. Appareil pour l'étirage en continu d'un film polymère synthétique dans la direction longitudinale, comprenant des moyens pour appliquer une tension d'étirage longitudinale au film tandis qu'il se déplace en continu dans la direction longitudinale à travers l'appareil, dans lequel une portée d'étirage du film est définie par deux rouleaux ou cylindres contra-rotatifs ayant des axes de rotation parallèles et disposés transversalement au trajet du film, ces rouleaux contra-rotatifs étant écartés l'un de l'autre de telle sorte que la portée ou étendue de film non supporté entre les rouleaux contra-rotatifs, mesurée perpendiculairement à leurs axes, soit inférieure à la somme des rayons des rouleaux contra-rotatifs, des moyens étant prévus pour chauffer le film à sa température d'étirage avec l'étirage, le premier rouleau contra-rotatif étant chauffé lors du travail au moins à la température d'étirage du film et le second rouleau contra-rotatif étant maintenu pendant le travail à une température égale à la température d'étirage du film ou inférieure à cette température, caractérisé en ce que le premier rouleau contra-rotatif est un rouleau en acier inoxydable à état de surface mat ou un rouleau à revêtement de chrome à état de surface mat ayant une matité de surface qui n'adhère pas sur le film quand le film est chauffé à la température d'étirage, cette matité de surface étant représentée par une valeur moyenne relativement à une ligne médiane comprise entre 127 et 889 nm (5 à 35 micropouces) (norme britannique 1134 : 1950).

## Patentansprüche

1. Verfahren zur kontinuierlichen Streckung einer synthetischen Polymer-Folie in Längsrichtung, bei dem auf die Folie, während sie sich kontinuierlich in Längsrichtung bewegt eine Längs-Streckspannung aufgebracht wird, die Folie über eine Streck-Spanne gestreckt wird, die von zwei benachbart angeordneten und gegensinnig drehenden, mit parallelen Drehachsen versehenen und senkrecht zur Folie angeordneten Walzen, über die die Folie läuft, definiert ist, wobei die zwischen den sich gegensinnig drehenden Walzen auftretende freie Spannweite der nicht unterstützten Folie in der zu den jeweiligen Walzenachsen senkrechten Richtung gemessen kleiner ist als die Summe der Radien der sich gegensinnig drehenden Walzen, und die Folie auf ihre Streck-temperatur erhitzt wird, wobei die erste der sich gegensinnig drehenden Walzen zumindest auf die Folien-Strecktemperatur gebracht und die zweite der sich gegensinnig drehenden Walzen auf einer Temperatur gehalten wird, die kleiner oder gleich der Folien-Strecktemperatur ist, dadurch gekennzeichnet, daß die erste der sich gegensinnig drehenden Walzen eine Walze aus rostfreiem Stahl oder eine chromplatierte Walze mit jeweils matter Oberfläche ist, deren Rauhigkeit so bemessen ist, daß die Folie, wenn sie auf die Strecktemperatur erhitzt ist, nicht an ihr haften bleibt, wobei die Rauhigkeit durch einen arithmetischen Mittenrauhigkeitswert dargestellt ist, der im Bereich von 127 bis 889 nm (5 bis 35 Mikroinch) liegt.

2. Verfahren nach Anspruch 1, dadurch gekennzeichnet, daß die zweite der sich gegensinnig drehenden Walzen eine Oberflächen-Textur besitzt, die durch einen arithmetischen Mittenrauhigkeitswert dargestellt ist, der im Bereich von 50.8 bis 76.2 nm (2 bis 3 Mikroinch) liegt.

3. Verfahren nach Anspruch 1 oder 2, dadurch gekennzeichnet, daß die Polyester-Folie eine Folie aus Polyäthylen-Terephthalat ist.

4. Vorrichtung zur kontinuierlichen Streckung einer synthetischen Polymer-Folie in Längsrich-tung, mit Mitteln zum Aufbringen einer Längs-Streckspannung auf die Folie, während diese sich kontinuierlich in Längsrichtung durch die Vorrichtung bewegt, wobei eine Folien-Streck-spanne zwischen zwei benachbart angeordneten gegensinnig drehenden, parallele Drehachsen aufweisenden und senkrecht zur Folienbahn angeordneten Walzen definiert ist, die zueinander in der Weise im Abstand stehen, daß die Spannweite der nicht unterstützten Folie zwischen den sich gegensinnig drehenden Walzen in einer Richtung senkrecht zu deren Achsen gemessen kleiner ist als die Summe der Radien der sich gegensinnig drehenden Walzen, und Mitteln, mit denen die Folie vor dem Streckvorgang auf ihre Streck-Temperatur erhitzt wird, wobei die erste der sich gegensinnig drehenden Walzen im Betrieb mindestens auf die Folien-Strecktemperatur gebracht und die zweite der sich gegensinnig drehenden Walzen im Betrieb auf einer Temperatur gehalten wird, die kleiner oder gleich der Folien-Streck-temperatur ist, dadurch gekennzeichnet, daß die erste der sich gegensinnig drehenden Walzen eine Walze aus rostfreiem Stahl oder eine chromplatierte Walze mit jeweils matter Oberfläche ist, deren Oberflächenrauhigkeit so bemessen ist, daß die Folie, wenn sie auf die Strecktemperatur erhitzt ist, nicht an ihr haften bleibt, wobei die Oberflächen-Rauhigkeit durch einen arithmetischen Mittenrauhigkeitswert dargestellt ist, der im Bereich von 127 bis 889 nm (5 bis 35 Mikroinch) liegt.